# EUROPÄISCHE PATENTSCHRIFT

(11) **EP 3 775 457 B1**
(45) Veröffentlichungstag und Bekanntmachung des Hinweises auf die Patenterteilung: **22.11.2023**
(21) Anmeldenummer: 19715370.3
(22) Anmeldetag: 07.03.2019
(51) Int. Cl.: E05F 3/16, E05F 15/622

(54) **ANTRIEBSVORRICHTUNG**
DRIVE APPARATUS
DISPOSITIF D'ENTRAÎNEMENT

(30) Priorität: 28.03.2018 DE 202018101761 U
(43) Veröffentlichungstag der Anmeldung: 17.02.2021
(73) Patentinhaber: Edscha Engineering GmbH, 42855 Remscheid (DE)
(72) Erfinder: BALS, Jochen, 44319 Dortmund (DE); DÖRNEN, Jörg, 58339 Breckerfeld (DE)
(74) Vertreter: IPrime Bonnekamp Sparing Patentanwaltsgesellschaft mbH
(86) Internationale Anmeldenummer: PCT/DE2019/100206
(87) Internationale Veröffentlichungsnummer: WO 2019/185081

(56) Entgegenhaltungen:
- WO-A1-2011/003827
- WO-A1-2017/081277
- DE-A1-102015 009 717
- DE-A1-102016 207 415

## Beschreibung

Die Erfindung betrifft eine Antriebsvorrichtung für eine schwenkbare Fahrzeugklappe.

Aus der Praxis sind Antriebsvorrichtungen bekannt, welche für eine automatische Verschwenkung einer Fahrzeugklappe, beispielsweise einer Heckklappe oder einer Fahrzeugtür, verwendet werden. Derartige Antriebsvorrichtungen sind meist als in ihrer Länge verstellbare Linearantriebe ausgebildet, welche mit einem ersten Ende an einem Karosserieteil und mit einem zweiten Ende an der zu verschwenkenden Fahrzeugklappe gelenkig verbunden sind, sodass bei einer Längenänderung der Antriebsvorrichtung eine Öffnungsbewegung oder eine Schließbewegung der Fahrzeugklappe bewirkt wird. Die Antriebsvorrichtung weist dabei oft eine Bremsanordnung auf, welche zum einen dazu dienen kann, die Antriebsvorrichtung gleichzeitig als Türfeststeller verwenden zu können, indem die Bremsanordnung einer durch äußere Kräfte bewirkte Verschwenkung der Fahrzeugklappe entgegenwirkt. Dabei können die Bremsvorrichtungen durch eine Steuervorrichtung derart beeinflusst werden, dass eine Bremskraft in Abhängigkeit äußerer Parameter bereitgestellt werden kann.

Neben einer zusätzlichen Feststellfunktion werden Bremsanordnungen in der Praxis ebenso dafür verwendet, dass bei Beendigung einer angetriebenen Bewegung der Fahrzeugklappe ein aufgrund der Trägheit auftretendes Nachlaufen der Antriebsvorrichtung weitgehend verhindert wird. Zu diesem Zweck werden permanent wirkende Bremsanordnungen in die Antriebsvorrichtung eingesetzt, beispielsweise Scheibenbremsen oder Lamellenbremsen, wobei die Bremskraft dadurch erzeugt wird, dass ein erstes gegenüber einem Gehäuse der Antriebsvorrichtung drehbares Bremselement und ein zweites, gegenüber einem Gehäuse der Antriebsvorrichtung festes Bremselement miteinander reibend in Kontakt stehen. Hierbei entsteht jedoch oftmals das Problem, dass die Bremskraft aufgrund des temperaturabhängigen Reibwertes der Bremsflächen der Bremselemente mit der Zeit variiert.

DE 10 2015 009 717 A1 zeigt eine Antriebsvorrichtung für eine schwenkbare Fahrzeugklappe mit einem Gehäuse, welches ein erstes Gehäuseteil und ein konzentrisch zu dem ersten Gehäuseteil angeordnetes zweites Gehäuseteil umfasst. In dem Gehäuse ist eine Spindelstange drehbar angeordnet. Weiter umfasst die gezeigte Antriebsvorrichtung eine drehfest angeordnete Spindelmutter, welche mit an der Spindelstange vorgesehenen Gewindeabschnitten In Eingriff gebracht werden kann. In dem Gehäuse ist eine als Lamellenbremse ausgebildete Bremsanordnung angeordnet. Die Bremsanordnung umfasst dabei ein Gehäuse, ein als Innenlamelle ausgebildetes erstes Bremselement, welches drehfest mit der Spindelstange verbunden ist, ein als Außenlamelle ausgebildetes zweites Bremselement, welches drehfest mit dem Gehäuse der Bremsanordnung verbunden ist und ein Vorspannmittel zur Vorspannung des ersten Bremselementes in Richtung auf das zweite Bremselement. Nachteilig an der gezeigten Antriebsvorrichtung bzw. der Bremsanordnung ist, dass die einander zugewandten Bremsflächen der Lamellen zur Vermeidung von Slip-Stick bzw. unregelmäßigen Reibwerten einen Ölfilm aufweisen müssen, welcher mit der Zeit erneuert werden muss. Entsprechend ist die Wartung eher aufwendig sowie das Dauerlaufverhalten mit der Zeit nicht optimal und zudem temperaturabhängig.

WO 2017/081277 A1 zeigt eine Antriebsvorrichtung für eine schwenkbare Fahrzeugklappe, wobei die Antriebsvorrichtung eine Bremsanordnung umfasst. Die Bremsanordnung umfasst ein Bremsengehäuse, ein mit einer zu bremsenden Komponente drehfest verbundenes erstes Bremselement, wobei das erste Bremselement als ringförmige Bremsscheibe mit zumindest einer ersten Bremsfläche ausgebildet ist. Weiter umfasst die Bremsanordnung ein an dem Bremsengehäuse drehfest angeordnetes zweites Bremselement, wobei das zweite Bremselement als ringförmige Bremsscheibe mit zumindest einer zweiten Bremsfläche ausgebildet ist. Die Bremsanordnung umfasst weiter ein als Spiralfeder ausgebildetes Vorspannmittel, welches das zweite Bremselement auf das erste Bremselement vorspannt.

DE 2016 207 415 A1 zeigt eine Bremsanordnung für eine Antriebsvorrichtung, umfassend ein Bremsengehäuse, ein drehfest auf einer Motorwelle eines Motors angeordnetes erstes Bremselement, wobei das erste Bremselement als ringförmige Bremsscheibe mit zumindest einer ersten Bremsfläche ausgebildet ist, und ein an dem Bremsengehäuse drehfest jedoch axial verlagerbar angeordnetes zweites Bremselement, wobei das zweite Bremselement als ringförmige Bremsscheibe mit zumindest einer zweiten Bremsfläche ausgebildet ist. Weiter umfasst die gezeigte Bremsanordnung ein als Schraubenfeder ausgebildetes Vorspannmittel zur Vorspannung des zweiten Bremselementes auf das erste Bremselement und ein zwischen dem ersten Bremselement und dem zweiten Bremselement angeordnetes Zwischenelement , welches als ringförmiges Band ausgebildet ist, wobei das erste Bremselement und das zweite Bremselement bei aktivierter Bremse durch das Zwischenelement voneinander beanstandet sind. Das Zwischenelement Ist dabei in einer Endfläche des zweiten Bremselementes eingelassenen ringförmigen Nut befestigt.

WO 2011/003827 A1 zeigt eine Bremsanordnung für eine schwenkbare Fahrzeugklappe, umfassend ein Bremsengehäuse, ein drehfest mit einer Spindelstange einer Antriebsvorrichtung verbindbares erstes Bremselement, wobei das erste Bremselement als ringförmige Bremsscheibe mit zumindest einer ersten Bremsfläche ausgebildet Ist. Weiter umfasst die gezeigte Bremsanordnung ein durch einen Abschnitt der Innenwand des Bremsgehäuses gebildetes zweites Bremselement, wobei das zweite Bremselement eine zweite Bremsfläche aufweist. Weiter umfasst die gezeigte Bremsanordnung ein Vorspannmittel, welches als Schraubenfeder ausgebildet ist, welche das erste Bremselement auf das zweite Bremselement vorspannt.

Dabei ist der Abschnitt der Innenwand des Gehäuses rotationssymmetrisch bezüglich einer Gehäuseachse und konisch verjüngt ausgebildet.

Es ist die Aufgabe der Erfindung, eine Antriebsvorrichtung für eine schwenkbare Fahrzeugklappe anzugeben, welche ein verbessertes Nachlaufverhalten aufweist.

Die vorgenannte Aufgabe wird erfindungsgemäß durch eine Antriebsvorrichtung mit den Merkmalen des Anspruchs 1 gelöst.

Gemäß einem Aspekt der Erfindung ist eine Antriebsvorrichtung für eine schwenkbare Fahrzeugklappe geschaffen, umfassend ein Gehäuse und eine drehbar in dem Gehäuse angeordnete Spindelstange. Die Antriebsvorrichtung umfasst weiter eine Bremsanordnung, umfassend ein Bremsengehäuse, ein mit der Spindelstange drehfest verbindbares erstes Bremselement, wobei das erste Bremselement als ringförmige Bremsscheibe mit zumindest einer ersten Bremsfläche ausgebildet ist. Weiter umfasst die Bremsanordnung ein mit dem Bremsengehäuse drehfest verbundenes zweites Bremselement, wobei zumindest eines vom erstem Bremselement und zweitem Bremselement entlang einer Längsachse der Spindelstange verlagerbar Ist. Weiter umfasst die Bremsanordnung ein zwischen dem ersten Bremselement und dem zweiten Bremselement angeordnetes Zwischenelement, wobei das erste Bremselement und das zweite Bremselement durch das Zwischenelement voneinander beabstandet sind. Weiter umfasst die Bremsanordnung ein Vorspannmittel zur Vorspannung des einen entlang der Längsachse der Spindelstange verlagerbaren Bremselementes in Richtung auf das andere Bremselement Die Antriebsvorrichtung zeichnet sich dabei dadurch aus, dass das Zwischenelement zwischen der ersten Bremsfläche des ersten Bremselementes und der zweiten Bremsfläche des zweiten Bremselementes angeordnet Ist und jeweils mit der ersten Bremsfläche des ersten Bremselementes und der zweiten Bremsfläche des zweiten Bremselementes in Kontakt ist. Vorteilhaft wird hierdurch eine Antriebsvorrichtung bereitgestellt, welche aufgrund des weitgehend temperaturunabhängigen und zuverlässigen Bremsverhaltens der Bremsanordnung ein verbessertes Nachlaufverhalten aufweist, sodass insbesondere bei einer Beendigung eines motorisch angetriebenen Verschwenkvorgangs einer angetriebenen Fahrzeugklappe ein zuverlässiges und regelmäßiges Stoppen erfolgt.

In einer bevorzugten Ausgestaltung ist vorgesehen, dass das Zwischenelement entlang der Längsachse der Spindelstange verlagerbar ist. Vorteilhaft wird so sichergestellt, dass das Zwischenelement gemeinsam mit dem verlagerbaren Bremselement in Richtung auf das andere Bremselement verlagert werden kann und so eine Bremswirkung durch den Reibkontakt zwischen dem Zwischenelement und dem Bremselement entsteht. Weiter vorteilhaft werden so durch Erwärmung verursachte Ausdehnungen ausgeglichen, sodass ein konstanter Reibwert zwischen dem Zwischenelement und dem Bremselement eingehalten wird.

In einer zweckmäßigen Ausgestaltung ist das erste Bremselement formschlüssig mit der Spindelstange verbindbar. In einer bevorzugten Ausgestaltung weist die Spindelstange In einem Bremsabschnitt eine Außenverzahnung auf. Vorteilhaft kann so das erste Bremselement drehfest durch Formschluss mit der Spindelstange in dem Bremsabschnitt verbunden werden, wobei das erste Rastelement jedoch In axialer Richtung der Spindelstange verlagerbar bleibt.

Zweckmäßigerweise ist die Bremsanordnung als eine Lamellenbremse ausgebildet Die Lamellenbremse weist dabei radial zu der Spindelstangenlängsachse hin gerichtete Außenlamellen auf, welche in einem festen axialen Abstand zueinander entlang eines Innenumfangs eines hohlzylindrischen Lamellenbremsengehäuses ortsfest angeordnet sind. Die Außenlamellen umgeben damit konzentrisch einen definierten Bremsabschnitt der Spindelstange, ohne die Spindelstange jedoch zu berühren. Die Bremsung der Drehung der Spindelstange um ihre Längsachse wird nun dadurch erreicht, dass die Spindelstange wiederum entlang ihres Außenumfangs radial umlaufende und axial beabstandete Innenlamellen aufweist, welche in dem Bremsabschnitt der Spindelstange so angeordnet sind, dass sie den Raum zwischen den Außenlamellen durchdringen, ohne dabei das hohlzylindrische Lamellenbremsengehäuse an seinem Innenumfang zu berühren. Die so ineinander greifenden Innen- und Außenlamellen werden dann durch das Vorspannmittel gegeneinander gepresst, so dass eine Reibung zwischen den Lamellen, vermittelt durch das Zwischenelement, entsteht, welche insbesondere eine Drehung der Spindelstange um Ihre Längsachse bremst.

Gemäß einer Weiterbildung ist eine Bremsanordnung für eine Antriebsvorrichtung geschaffen, umfassend ein Bremsengehäuse, ein erstes Bremselement, ein zweites Bremselement und ein Vorspannmittel zur Vorspannung eines von erstem Bremselement und zweitem Bremselement auf das andere von erstem Bremselement und zweitem Bremselement. Die Bremsanordnung zeichnet sich dabei dadurch aus, dass zwischen dem ersten Bremselement und dem zweiten Bremselement ein Zwischenelement angeordnet ist, wobei das erste Bremselement und das zweite Bremselement durch das Zwischenelement voneinander beabstandet sind. Vorteilhaft lässt sich durch das Zwischenelement ein verbessertes Verhalten der Bremsanordnung in Bezug auf die Einhaltung eines konstanten Reibwertes dauerhaft realisieren. Zudem kann das Zwischenelement bei Bedarf einfach ausgewechselt werden, wobei die Bremselemente selbst nicht gewechselt werden müssen, ohne dass eine Veränderung der in der Bremsanordnung vorgesehenen Reibwerte auftritt. Schließlich wird durch das Zwischenelement ermöglicht, kostengünstigere Materialien für die Bremselemente zu wählen, sodass die Herstellungskosten für die Bremsanordnung Insgesamt verringert werden können.

Das Zwischenelement besteht zumindest teilweise aus einem Karbongewebe. Karbon zeichnet sich insbesondere durch eine hohe Druckfestigkeit und Härte aus, wobei die Festigkeit mit steigender Temperatur nicht abnimmt und so eine weitgehend temperaturunabhängige Beständigkeit aufweist. Weiter ist Karbon für die sehr guten Gleiteigenschaften bekannt, sodass zum einen die Verschteißerscheinungen während eines Dauerbetriebes gering sind, und gleichzeitig aufgrund der hervorragenden Gleiteigenschaften kein Slip-Stick auftritt bzw. Karbon einen konstanten Reibwert über einen weiteren Temperaturbereich aufweist. Das Gewebe kann dabei die bekannten Gewebebindungen wie Leinwand, Köper und Atlas aufweisen.

Erfindungsgemäß ist vorgesehen, dass das erste Bremselement ringförmig ausgebildet ist. Vorteilhaft kann das erste Bremselement so leicht auf ein zu bremsendes Teil der Antriebsvorrichtung geschoben und drehfest verbunden werden, sodass ein besonders einfaches Austauschen möglich ist. Besonders bevorzugt ist das erste Bremselement als ringförmige Innenlamelle mit zumindest einer ersten Bremsfläche ausgebildet.

Erfindungsgemäß ist das zweite Bremselement ringförmig ausgebildet. Besonders bevorzugt ist das zweite Bremselement als ringförmige Außenlamelle mit zumindest einer zweiten Bremsfläche ausgebildet. Vorteilhaft kann so das erste Bremselement und das zweite Bremselement mit ihren jeweiligen Bremsflächen in Kontakt mit dem Zwischenelement gebracht werden, sodass die Reibung, welche die bremsende Wirkung erzeugt, zwischen dem jeweiligen Bremsflächen der Bremselemente und dem Zwischenelement entsteht, sodass verbesserte Bremseigenschaften erzielt werden können.

Besonders bevorzugt weist das ringförmige erste Bremselement an einem Innenumfang einer Innenverzahnung auf. Vorteilhaft lässt sich das erste Bremselement leicht auf ein eine entsprechende Außenverzahnung aufweisendes Bauteil der Antriebsvorrichtung aufschieben, wobei das Bremselement sowohl axial verlagerbar und zudem gleichzeitig drehfest auf dem Bauteil angeordnet ist. Hierdurch wird vorteilhaft sichergestellt, dass zum einen die Bremskraft durch das Vorspannmittel eingestellt werden kann und zum anderen ein leichter Austausch des Bremselementes möglich ist.

In einer zweckmäßigen Ausgestaltung umfasst die Bremsanordnung ein Anschlagteil, wobei das Vorspannmittei mit einem ersten Ende an dem Anschlagteil und mit einem zweiten Ende an einem von erstem Bremselement und zweitem Bremselement anliegt. Vorteilhaft wird hierdurch die feine regelmäßige Bremswirkung erforderliche Vorspannung durch das Anschlagteil bereitgestellt, wobei die Vorspannung zudem durch die Anordnung des Anschlagteils relativ zu den Bremselementen mitbestimmt wird.

In einer bevorzugten Ausgestaltung ist vorgesehen, dass das Anschlagteil ringförmig ausgebildet ist. Vorteilhaft kann das Anschlagteil so materialsparend ausgebildet sein, wobei das Anschlagteil bzw. die Ringfläche derart dimensioniert wird, dass sowohl eine Anschlagfläche für das Vorspann mittel bereitgestellt wird und zudem die Möglichkeit besteht, darüber hinaus Führungsflächen für das Vorspannmittel bereitzustellen.

Besonders bevorzugt weist das Anschlagteil an einem Außenumfang ein Außengewinde auf. Vorteilhaft wird hierdurch die Möglichkeit geschaffen, das Anschlagteil einfach durch Einschrauben einzusetzen bzw. durch Ausschrauben wieder zu entfernen, sodass das Anschlagteil einfach gewechselt werden kann und zudem ein einfacher Zugang zu dem Vorspannmittel bzw. den Bremselementen und dem Zwischenelement ermöglicht wird. Zweckmäßigerwerse weist das Bremsengehäuse zumindest abschnittsweise ein Innengewinde auf, wobei das Außengewinde des Anschlagteils mit dem Innengewinde des Bremsengehäuses kämmt. Vorteilhaft kann so die Vorspannung des Vorspannmittels durch Ein- beziehungsweise Ausschrauben des Anschlagteils relativ zu dem Bremsengehäuse reguliert werden.

Zweckmäßigerweise ist das Vorspannmittel afs Druckfeder ausgebildet. Vorteilhaft ist so eine zuverlässige und kostengünstige Möglichkeit geschaffen, die Bremskraft durch Auswahl der Druckfeder zu wählen. Zudem ist ein einfacher Austausch der Druckfeder möglich.

Weitere Vorteile, Weiterbildungen und Eigenschaften der Erfindung ergeben sich aus der nachstehenden Beschreibung eines bevorzugten Ausführungsbeispiels sowie aus den abhängigen Ansprüchen.

Die Erfindung wird nunmehr unter Bezugnahme auf die anliegenden Zeichnungen und anhand eines bevorzugten Ausführungsbeispiels der Erfindung näher erläutert.
- Fig. 1: zeigt einen Längsschnitt eines Ausführungsbeispiels einer Antriebsvorrichtung.
- Fig. 2: zeigt einen vergrößerten Ausschnitt des In Fig. 1 gezeigten Ausführungsbeispiels einer Antriebsvorrichtung
- Fig. 3: zeigt die in Fig. 1 und Fig. 2 gezeigte Bremsanordnung im ausgebauten Zustand in einer Detailansicht.

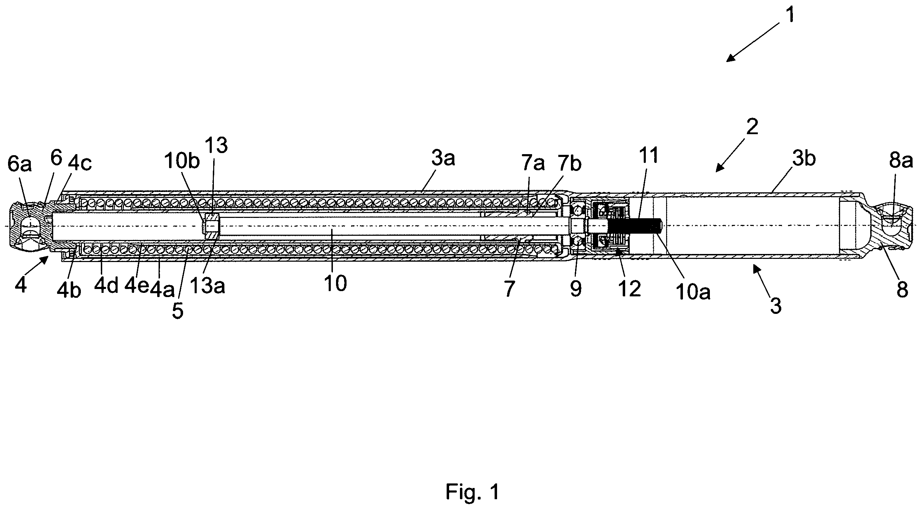

Fig. 1 zeigt einen Längsschnitt einer Antriebsvorrichtung 1 im vollständig eingefahrenen Zustand. Das geschlossene Gehäuse 2 der Antriebsvorrichtung 1 umfasst dabei ein erstes Gehäuseteil 3 und ein zweites Gehäuseteil 4. Das erste Gehäuseteil 3 und das zweite Gehäuseteil 4 sind in dem Ausführungsbeispiel als offene Hohlzylinder ausgebildet, welche konzentrisch übereinander geschoben sind, so dass das geschlossene Gehäuse 2 der Antriebsvorrichtung 1 teleskopartig ein- und ausfahrbar ist. Dabei weist das erste Gehäuseteil 3 in einem ersten Abschnitt 3a einen größeren Innen- und Außendurchmesser als in einem daran angrenzenden zweiten Abschnitt 3b auf. Der erste Abschnitt 3a ist dabei in axialer Richtung soweit erstreckt, dass das zweite Gehäuseteil 4 in den ersten Abschnitt 3a des ersten Gehäuseteils 3 fast vollständig hineingeschoben werden kann.

Eine als Hohlzylinder ausgebildete Außenwand 4a des zweiten Gehäuseteils 4 wird an einem dem zweiten Abschnitt 3b des ersten Gehäuseteils 3 abgewandten Ende des zweiten Gehäuseteils 4 durch einen rechtwinklig nach innen radial umlaufenden ringförmigen Boden 4b begrenzt, welcher als eine erste Anschlagfläche für eine Schraubenfeder 5 dient. Der ringförmige Boden 4b weist auf der der Schraubenfeder 5 abgewandten Seite einen Hohlzylinderfortsatz 4c auf, in den formschlüssig ein erstes Gelenkteil 6 eingepresst ist, welches eine selbstsichernde Kunststoffkugelpfanne 6a in seinem Inneren aufweist. Das erste Gelenkteil 6 definiert damit ein erstes geschlossenes Ende des Gehäuses 2, an welchem beispielsweise eines von Fahrzeugklappe und Karosserieteil gelenkig anschließbar ist

In dem dem Ringboden 4b zugewandten Ende des ersten Gelenkteils 6 ist ein weiterer Hohlzylinder 4d eingepresst, welcher konzentrisch innerhalb des zweiten hohlzylindrischen Gehäuseteils 4 angeordnet ist. Der Außendurchmesser des Hohlzylinders 4d entspricht dabei dem Innendurchmesser des Ringbodens 4b. Die Schraubenfeder 5 ist dabei so angeordnet bzw. ausgebildet, dass diese sich in axialer Richtung über den ersten Abschnitt 3a des ersten Gehäuseteils 3 erstreckt und sich radial zwischen der Außenwand 4a und dem Hohlzylinder 4d befindet. In einem dem ersten Gelenkteil 6 abgewandten Endabschnitt des Hohlzylinders 4d ist entlang des Innenumfangs des Hohlzylinders 4d eine zylindrische Spindelmutter 7 eingepresst. Die Spindelmutter 7 weist dabei an einer Stirnseite 7a eine Fase 7b auf.

Der zweite Abschnitt 3b des ersten Gehäuseteils 3 weist an seinem dem ersten Gelenkteil 6 abgewandten Ende ein eingepresstes zweites Gelenkteil 8 mit einer selbstsichemden Kugelpfanne 8a auf. Das zweite Gelenkteil 8 definiert damit ein zweites geschlossenes Ende des Gehäuses 2, an welchem wie bei dem ersten Gelenkteil 6 das andere von Heckklappe und Karosserieteil gelenkig anschließbar ist.

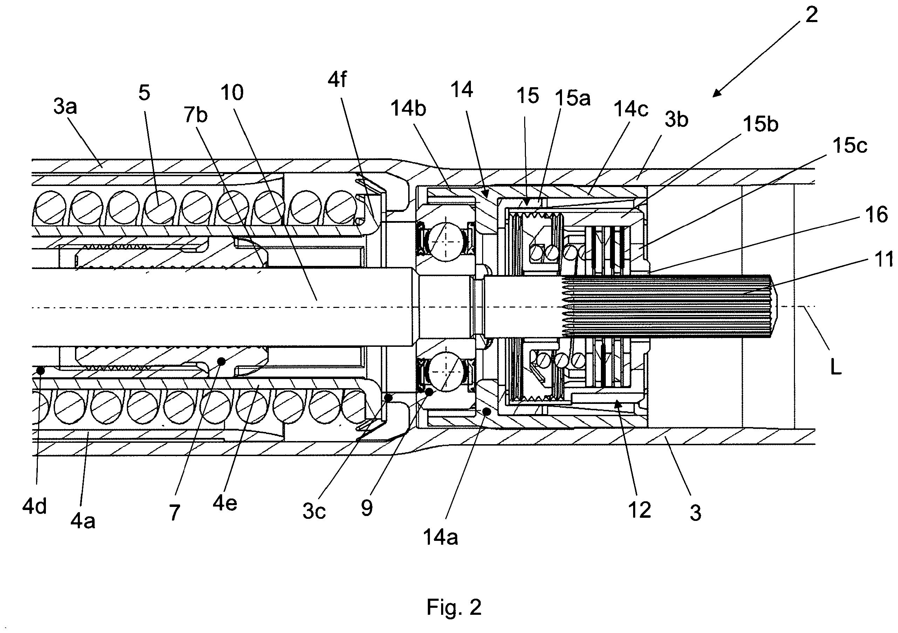

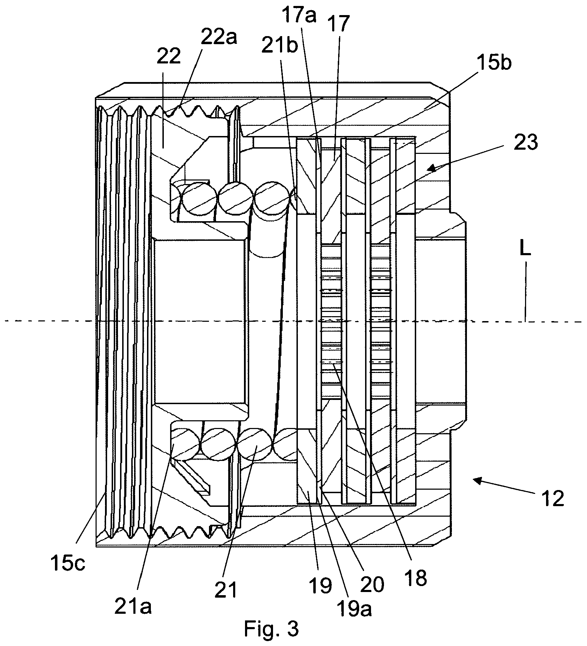

In dem an dem ersten Abschnitt 3a grenzenden Endabschnitt des zweiten Abschnittes 3b des ersten Gehäuseteils 3 ist ein ringförmiges Kugellager 9 eingepresst, in welchem eine Spindelstange 10 um deren Längsachse L drehbar gelagert ist Die Spindelstange 10 ist dabei axial über einen so großen Bereich Innerhalb des Gehäuses 2 erstreckt, dass die Spindelstange 10 das Kugellager 9 und die Spindelmutter 7 vollständig und einen Teil des ersten Gehäuseteils 3 konzentrisch durchsetzt. Die Spindelstange 10 weist dabei in einem dem zweiten Gelenkteil 8 zugewandten ersten Endabschnitt 10a ein sich axial erstreckendes Rillenprofil 11 auf. Der Endabschnitt 10a wird dabei radial zumindest abschnittsweise von einer als Lamellenbremse ausgebildeten Bremsanordnung 12 radial umschlossen, welche im Detail in Fig. 2 und Fig. 3 näher gezeigt ist. An einem dem ersten Endabschnitt 10a gegenüberliegenden Ende 10b der Spindelstange 10 ist weiter ein Anschlagteil 13 fest angeordnet, welches durch eine der Spindelmutter 7 zugewandten Stirnfläche eine ringförmige Anschlagfläche 13a bildet. Der Außendurchmesser des Anschlagteils 13 entspricht dabei dem Innendurchmesser des Hohlzylinders 4d und ist konzentrisch zu dem ersten Gehäuseteil 3 und dem zweiten Gehäuseteil 4 angeordnet.

Fig. 2 zeigt einen vergrößerten Ausschnitt des in Fig. 1 gezeigten Ausführungsbeispiels einer Antriebsvorrichtung, welche insbesondere den Aufbau der als Lamellenbremse ausgebildeten Bremsanordnung 12 genauer gezeigt.

In dem an dem ersten Abschnitt 3a grenzenden Endabschnitt des zweiten Abschnittes 3b des ersten Gehäuseteils 3 ist ein Hohlzylinder 14 eingepresst, welcher entlang seines Innenumfangs einen Ringboden 14a aufweist, welcher die Innenwand des Hohlzylinders 14 in einen dem zweiten Gelenkteil 8 abgewandten Abschnitt 14b und einen dem zweiten Gelenkteil 8 zugewandten Abschnitt 14c unterteilt, Entlang des Innendurchmessers des Abschnitts 14b ist das ringförmige Kugellager 9 eingepresst. Das Kugellager 9 ist an seiner dem ersten Gelenkteil 8 zugewandten Seite über einen Steg 3c mit einem Hohlzylinder 4e des zweiten Gehäuseteils 4 verbunden, welcher in den durch den ersten Abschnitt 3a des ersten Gehäuseteils 3 umschlossenen Raum konzentrisch in das erste Gehäuseteil 3 hineinragt. Der Hohlzylinder 4e umschliesst dabei radial den Hohlzylinder 4d, wobei die Schraubenfeder 5 wiederum den Hohlzylinder 4e radial umläuft.

An dem dem Kugellager 9 nächstgelegenen Ende weist der Hohlzylinder 4e entlang seines Außenumfangs einen radial umlaufenden Kragen 4f auf, welcher eine zweite Anschlagsfläche für die Schraubenfeder 5 bildet.

In den Abschnitt 14c des Hohlzylinders 14 ist ein Bremsengehäuse 15 der Lamellenbremse 12 eingepresst, welches ein erstes topfförmiges Bremsengehäuseteil 15a und zweites topfförmiges Bremsengehäuseteil 15b umfasst. Das erste Bremsengehäuseteil 15a weist dabei mit seinem offenen Ende in Richtung auf das erste Gelenkteil 6 und das zweite Bremsengehäuseteil 15b ist wiederum mit seinem dem zweiten Gelenkteil 8 abgewandten offenen Ende so in das erste Bremsengehäuseteil 15a eingepresst, dass der radial durch den Abschnitt 14c des Hohlzylinders 14 umgebene Raum eingeschlossen wird. Das zweite topfförmige Bremsengehäuseteil 15b weist dabei eine konzentrische Bohrung 16 in seiner Bodenfläche 15c auf, welche von der Spindelstange 10 durchsetzt wird.

Fig. 3 zeigt die in Fig. 2 gezeigte als Lamellenbremse ausgebildete Bremsanordnung 12 im ausgebauten Zustand in einer Detailansicht Die Bremsanordnung 12 umfasst ein erstes ringförmiges Bremselement 17, welches als Innenlamelle mit einer ersten Bremsfläche 17a ausgebildet ist und an seinem Innendurchmesser eine Innenverzahnung 18 aufweist, welche mit dem Rillenprofil 11 der Spindelstange 10 im eingebauten Zustand in Eingriff ist Hierdurch ist das erste Bremselement 17 axial entlang der Längsachse L der Spindelstange 10 verlagerbar und ist gleichzeitig drehfest mit der Spindelstange 10 verbindbar. An einem Innendurchmesser des zweiten Bremsengehäuseteils 15b des Bremsengehäuses 15 ist ein zweites ringförmiges Bremselement 19 mit einer zweiten Bremsfläche 19a. schwimmend, jedoch drehfest angeordnet. Zwischen dem ersten Bremselement 17 und dem zweiten Bremselement 19 ist ein ringförmiges Zwischeneiement 20 angeordnet, welches als Scheibe aus gewebtem Karbon ausgebildet ist.

Die Bremsanordnung 12 umfasst weiter ein als Druckfeder ausgebildetes Vorspannmittel 21, welches mit einem ersten Ende 21a an einem in das zweite Bremsengehäuseteil 15b eingeschraubten Anschlagteil 22 anliegt, welches ringförmig ausgebildet ist und ein Außengewinde 22a aufweist, welches mit einem an einem Innendurchmesser des zweiten Bremsengehäuseteils 15b des Bremsengehäuses 15 vorgesehenen Innengewinde 15c in Eingriff steht. Ein zweites Ende 21b des Vorspanmittels 21 liegt an dem zweiten Bremselement 19 an. Somit spannt das Vorspannmittel 21 das zweite Bremselement 19 auf das erste Bremselement 17 vor und sorgt so dafür, dass das Zwischenelement 20 zwischen dem ersten Bremselement 17 und dem zweiten Bremselement 19 eingeklemmt wird und somit durch die Reibung eine Bremswirkung auf die Drehbewegung der Spindelstange 10 realisierbar ist. In dem hier gezeigten Ausführungsbeispiel umfasst die Bremsanordnung zwei erste Bremselemente 17, drei zweite Bremselemente 19 und vier Zwischenelemente 20, welche gemeinsam ein Lamellenpaket 23 bilden.

Das ringförmige Anschlagteil 22 weist an seinem Innenumfang einen vorstehenden Hohlzylinderabschnitt 22b auf, welcher der Führung des als Druckfeder ausgebildeten Vorspannmittels 21 dient, welches den Hohlzylinderabschnitt 22b radial umläuft.

Vorstehend wurde die Erfindung anhand eines Ausführungsbeispiels erläutert, bei dem das Vorspannmittel an dem zweiten Bremselement anliegt und dieses in Richtung auf das erste Bremselement vorspannt. Es versteht sich, dass das Vorspannmittel auch an dem ersten Bremselement anliegen kann und dieses in Richtung auf das zweite Bremselement vorspannt. Allgemein kann die Anzahl Reihenfolge der in dem Lamellenpaket vorhandenen Bremselemente und Zwischenelemente beliebig gewählt werden, soweit zwischen den Bremselementen zumindest ein Zwischenelement angeordnet ist.

## Patentansprüche

1. Antriebsvorrichtung für eine schwenkbare Fahrzeugklappe, umfassend
ein Gehäuse (2),
eine drehbar in dem Gehäuse (2) angeordnete Spindelstange (10),
eine Bremsanordnung (12), umfassend
ein Bremsengehäuse (15),
ein mit der Spindelstange (10) drehfest verbindbares erstes Bremselement (17), wobei das erste Bremselement (17) als ringförmige Bremsscheibe mit zumindest einer ersten Bremsfläche (17a) ausgebildet ist,
ein mit dem Bremsengehäuse (15) drehfest verbundenes zweites Bremselement (19), wobei das zweite Bremselement (19) als ringförmige Bremsscheibe mit zumindest einer zweiten Bremsfläche (19a) ausgebildet ist, wobei zumindest eines von erstem Bremselement (17) und zweitem Bremselement (19) entlang einer Längsachse (L) der Spindelstange (10) verlagerbar ist, und
ein Vorspannmittel (21) zur Vorspannung des einen entlang der Längsachse (L) der Spindelstange verlagerbaren Bremselementes (17; 19) in Richtung auf das andere Bremselement (19; 17), **dadurch gekennzeichnet, dass** die Bremsanordnung ein zwischen dem ersten Bremselement (17) und dem zweiten Bremselement (19) angeordnetes Zwischenelement (20) umfasst, wobei das erste Bremselement (17) und das zweite Bremselement (19) durch das Zwischenelement (20) voneinander beabstandet sind, und
wobei das Zwischenelement (20) zwischen der ersten Bremsfläche (17a) des ersten Bremselementes (17) und der zweiten Bremsfläche (19a) des zweiten Bremselementes (19) angeordnet ist und jeweils mit der ersten Bremsfläche (17a) des ersten Bremselementes (17) und der zweiten Bremsfläche (19a) des zweiten Bremselementes (19) in Kontakt ist und wobei das Zwischenelement (20) zumindest teilweise aus einem Karbongewebe besteht.

2. Antriebsvorrichtung nach Anspruch 1, **dadurch gekennzeichnet, dass** das Zwischenelement (20) entlang der Längsachse (L) der Spindelstange (10) verlagerbar ist.

3. Antriebsvorrichtung nach Anspruch 1 oder 2, **dadurch gekennzeichnet, dass** das Zwischenelement (20) um die Längsachse (L) der Spindelstange (10) drehbar ist.

4. Antriebsvorrichtung nach einem der Ansprüche 1 bis 3, **dadurch gekennzeichnet, dass** das erste Bremselement (17) formschlüssig mit der Spindelstange (10) verbindbar ist.

5. Antriebsvorrichtung nach Anspruch 4, **dadurch gekennzeichnet, dass** die Spindelstange (10) in einem Endabschnitt (10a) ein Rillenprofil (11) aufweist.

6. Antriebsvorrichtung nach einem der vorhergehenden Ansprüche, **dadurch gekennzeichnet, dass** das Zwischenelement (20) als Scheibe aus gewebtem Karbon ausgebildet ist.

7. Antriebsvorrichtung nach einem der vorhergehenden Ansprüche, **dadurch gekennzeichnet, dass** das erste Bremselement (17) an einem Innenumfang eine Innenverzahnung (18) aufweist.

8. Antriebsvorrichtung nach Anspruch 7, **dadurch gekennzeichnet, dass** die Innenverzahnung (18) mit einem Rillenprofil (11) der Spindelstange (10) in Eingriff ist.

9. Antriebsvorrichtung nach einem der vorhergehenden Ansprüche, **dadurch gekennzeichnet, dass** die Bremsanordnung (12) ein Anschlagteil (22) umfasst, wobei das Vorspannmittel (21) mit einem ersten Ende (21a) an dem Anschlagteil (22) und mit einem zweiten Ende (21b) an einem von erstem Bremselement (17) und zweitem Bremselement (19) anliegt.

10. Antriebsvorrichtung nach Anspruch 8, **dadurch gekennzeichnet, dass** das Anschlagteil (22) ringförmig ausgebildet ist.

11. Antriebsvorrichtung nach Anspruch 8 oder 9, **dadurch gekennzeichnet, dass** das Anschlagteil (22) an einem Außenumfang ein Außengewinde (22c) aufweist.

12. Antriebsvorrichtung nach Anspruch 11, **dadurch gekennzeichnet, dass** das Bremsengehäuse (15) zumindest abschnittsweise ein Innengewinde (15c) aufweist, wobei das Außengewinde (22c) des Anschlagteils (22) mit dem Innengewinde (15c) des Gehäuses (15) kämmt.

13. Antriebsvorrichtung nach einem der vorhergehenden Ansprüche, **dadurch gekennzeichnet, dass** das Vorspannmittel (21) als Druckfeder ausgebildet ist.

14. Antriebsvorrichtung nach einem der vorhergehenden Ansprüche, **dadurch gekennzeichnet, dass** die Bremsanordnung (12) als Lamellenbremse ausgebildet ist, wobei das erste Bremselement (17) als Innenlamelle ausgebildet ist und an seinem Innendurchmesser eine Innenverzahnung (18) aufweist, welche mit einem Rillenprofil (11) der Spindelstange (10) in Eingriff ist.

## Claims

1. Drive apparatus for a pivotable vehicle flap, comprising
a housing (2),
a spindle rod (10) which is rotatably arranged in the housing (2),
a brake arrangement (12), comprising
a brake housing (15),
a first brake element (17) which can be non-rotatably connected to the spindle rod (10), wherein the first brake element (17) is designed as an annular brake disk having at least one first brake surface (17a);
a second brake element (19) which is non-rotatably connected to the brake housing (15), wherein the second brake element (19) is designed as an annular brake disk having at least one second brake surface (19a), wherein at least one of the first brake element (17) and the second brake element (19) is displaceable along a longitudinal axis (L) of the spindle rod (10), and
a biasing means (21) for biasing the brake element (17; 19) which is displaceable along the longitudinal axis (L) of the spindle rod in the direction towards the other brake element (19; 17),
**characterized in that**
the brake arrangement (12) comprises an intermediate element (20) arranged between the first brake element (17) and the second brake element (19),
wherein the first brake element (17) and the second brake element (19) are spaced apart from one another by the intermediate element (20), and wherein the intermediate element (20) is arranged between the first brake surface (17a) of the first brake element (17) and the second brake surface (19a) of the second brake element (19) and is in contact with the first brake surface (17a) of the first brake element (17) and the second brake surface (19a) of the second brake element (19) and
wherein the intermediate element (20) consists at least in part of a carbon-fibre fabric.

2. Drive apparatus according to claim 1, **characterized in that** the intermediate element (20) is displaceable along the longitudinal axis (L) of the spindle rod (10).

3. Drive apparatus according to claim 1 or 2, **characterized in that** the intermediate element (20) is rotatable about the longitudinal axis (L) of the spindle rod (10).

4. Drive apparatus according to one of claims 1 to 3, **characterized in that** the first brake element (17) can be interlockingly connected to the spindle rod (10).

5. Drive apparatus according to claim 4, **characterized in that** the spindle rod (10) has a groove profile (11) in an end portion (10a).

6. Drive apparatus according to one of the preceding claims, **characterized in that** the intermediate element (20) is designed as a disk made of woven carbon.

7. Drive apparatus according to one of the preceding claims, **characterized in that** the first brake element (17) has an inner toothing (18) on an inner circumference.

8. Drive apparatus according to claim 7, **characterized in that** the inner toothing (18) is engaged with a groove profile (11) of the spindle rod (10).

9. Drive apparatus according to one of the preceding claims, **characterized in that** the brake arrangement (12) comprises a stop member (22), wherein a first end (21a) of the biasing means (21) rests against the stop member (22) and a second end (21b) of the biasing means rests against one of the first brake element (17) and the second brake element (19).

10. Drive apparatus according to claim 8, **characterized in that** the stop member (22) is designed to be annular.

11. Drive apparatus according to claim 8 or 9, **characterized in that** the stop member (22) has an outer thread (22c) on an outer circumference.

12. Drive apparatus according to claim 11, **characterized in that** the brake housing (15) has at least in portions an inner thread (15c), wherein the outer thread (22c) of the stop member (22) engages with the inner thread (15c) of the housing (15).

13. Drive apparatus according to one of the preceding claims, **characterized in that** the biasing means (21) is designed as a compression spring.

14. Drive apparatus according to one of the preceding claims, **characterized in that** the brake arrangement (12) is designed as a multi-disk brake, wherein the first brake element (17) is designed as an inner disk and has an inner toothing (18) on its inner diameter, which inner toothing (18) is engaged with a groove profile (11) of the spindle rod (10).

## Revendications

1. Dispositif d'entraînement pour un élément de type clapet de véhicule pouvant pivoter, comprenant
un boîtier (2),
une tige de broche (10) disposée de manière à pouvoir pivoter dans le boîtier (2),
un agencement de freinage (12), comprenant
un boîtier de frein (15),
un premier élément de freinage (17) pouvant être relié de manière solidaire en rotation à la tige de broche (10), le premier élément de freinage (17) étant réalisé sous la forme d'un disque de frein annulaire comportant au moins une première surface de freinage (17a),
un second élément de freinage (19) relié de manière solidaire en rotation au boîtier de frein (15), le second élément de freinage (19) étant réalisé sous la forme d'un disque de frein annulaire comportant au moins une seconde surface de freinage (19a), au moins l'un parmi le premier élément de freinage (17) et le second élément de freinage (19) pouvant être déplacé le long d'un axe longitudinal (L) de la tige de broche (10), et
un moyen de précontrainte (21) permettant de précontraindre un élément de freinage (17 ; 19) pouvant être déplacé le long de l'axe longitudinal (L) de la tige de broche en direction de l'autre élément de freinage (19 ; 17),
**caractérisé en ce**
**que** l'agencement de freinage comprend un élément intermédiaire (20) disposé entre le premier élément de freinage (17) et le second élément de freinage (19), le premier élément de freinage (17) et le second élément de freinage (19) étant espacés l'un de l'autre par l'élément intermédiaire (20), et
l'élément intermédiaire (20) étant disposé entre la première surface de freinage (17a) du premier élément de freinage (17) et la seconde surface de freinage (19a) du second élément de freinage (19) et étant respectivement en contact avec la première surface de freinage (17a) du premier élément de freinage (17) et la seconde surface de freinage (19a) du second élément de freinage (19), et
l'élément intermédiaire (20) étant au moins partiellement constitué d'un tissu en carbone.

2. Dispositif d'entraînement selon la revendication 1, **caractérisé en ce que** l'élément intermédiaire (20) peut être déplacé le long de l'axe longitudinal (L) de la tige de broche (10).

3. Dispositif d'entraînement selon la revendication 1 ou 2, **caractérisé en ce que** l'élément intermédiaire (20) peut tourner autour de l'axe longitudinal (L) de la tige de broche (10).

4. Dispositif d'entraînement selon l'une des revendications 1 à 3, **caractérisé en ce que** le premier élément de freinage (17) peut être relié par complémentarité de forme à la tige de la broche (10).

5. Dispositif d'entraînement selon la revendication 4, **caractérisé en ce que** la tige de broche (10) présente un profil rainuré (11) dans une section d'extrémité (10a).

6. Dispositif d'entraînement selon l'une des revendications précédentes, **caractérisé en ce que** l'élément intermédiaire (20) est réalisé sous la forme d'un disque en carbone tissé.

7. Dispositif d'entraînement selon l'une des revendications précédentes, **caractérisé en ce que** le premier élément de freinage (17) présente une denture intérieure (18) au niveau d'une circonférence intérieure.

8. Dispositif d'entraînement selon la revendication 7, **caractérisé en ce que** la denture intérieure (18) est en prise avec un profil rainuré (11) de la tige de broche (10).

9. Dispositif d'entraînement selon l'une des revendications précédentes, **caractérisé en ce que** l'agencement de freinage (12) comprend une partie de butée (22), le moyen de précontrainte (21) reposant avec une première extrémité (21a) sur la partie de butée (22) et avec une seconde extrémité (21b) sur un élément parmi le premier élément de freinage (17) et le second élément de freinage (19).

10. Dispositif d'entraînement selon la revendication 8, **caractérisé en ce que** la partie de butée (22) est réalisée sous forme annulaire.

11. Dispositif d'entraînement selon la revendication 8 ou 9, **caractérisé en ce que** la partie de butée (22) présente un filetage extérieur (22c) au niveau d'une circonférence extérieure.

12. Dispositif d'entraînement selon la revendication 11, **caractérisé en ce que** le boîtier de frein (15) présente, au moins dans certaines régions, un filetage intérieur (15c), le filetage extérieur (22c) de la partie de butée (22) s'engrenant avec le filetage intérieur (15c) du boîtier (15).

13. Dispositif d'entraînement selon l'une des revendications précédentes, **caractérisé en ce que** le moyen de précontrainte (21) est réalisé sous la forme d'un ressort de compression.

14. Dispositif d'entraînement selon l'une des revendications précédentes, **caractérisé en ce que** l'agencement de freinage (12) est réalisé sous la forme d'un frein à disques multiples, le premier élément de freinage (17) étant réalisé sous la forme d'un disque intérieur et présentant, au niveau de son diamètre intérieur, une denture intérieure (18) qui est en prise avec un profil rainuré (11) de la tige de broche (10).
